# NEUE EUROPÄISCHE PATENTSCHRIFT

(11) **EP 0 993 995 B2**
(45) Veröffentlichungstag und Bekanntmachung des Hinweises auf die Entscheidung über den Einspruch: **20.08.2008**
(45) Hinweis auf die Patenterteilung: 23.04.2003
(21) Anmeldenummer: 99120110.4
(22) Anmeldetag: 08.10.1999
(51) Int. Cl.: B60R 16/02, B60K 35/00, B60K 37/06

(54) **Multifunktions-Bedienelement für den Einsatz in Kraftfahrzeugen**
Multifunctional operating device for a motor vehicle
Dispositif de commande multi-fonctions pour automobile

(30) Priorität: 15.10.1998 DE 19847610; 03.09.1999 DE 19941963; 20.10.1998 DE 19848207
(43) Veröffentlichungstag der Anmeldung: 19.04.2000
(73) Patentinhaber: Volkswagen Aktiengesellschaft, 38436 Wolfsburg (DE)
(72) Erfinder: Kriegel, Dieter, Dipl.-Ing., 38528 Adenbüttel (DE); Golisch, Frank, Dipl.-Ing., 38108 Braunschweig (DE); Dobberkau, Thomas, 38527 Meine (DE); Sievers, Stefan, 38553 Wasbüttel (DE)
(74) Vertreter: Meyer, Enno

(56) Entgegenhaltungen:
- EP-A- 0 461 360
- EP-A- 0 701 926
- DE-A- 3 628 333
- DE-C- 3 514 438
- "The Automobile: the next mobile computing platform" aus Automotive Engineering International, Oktober 1998
- Vario Research Car, Ideen für die Zukunft, 1996
- Presse-Information der Mercedes-Benz AG, 24.10.1996
- Sternstunden der Technik; Alles über die Mercedes-Personenwagen, 1997

## Beschreibung

Die Erfindung betrifft ein Multifunktions bedienelement element für Kraftfahrzeuge insbesondere für solche Kraftfahrzeuge mit einem Bildschirm, sowie randseitig am Bildschirm angeordnete Bedientasten, gemäß Oberberiff des Patentanspruches 1.

Ein derartiges Multifunktions bedienelement ist beisp.w. aus der DE 3 628 333 A1 oder der EP 0 461 360 bekannt. Weitere Multifunktionsbedienelemente für Kraftfahrzeuge sind in vielfältiger Art bekannt. Sie fassen in Ihrer Funktion die Bedienebenen verschiedener Geräte im Kraftfahrzeug zusammen. Hierzu gehören Radio, CD-Spieler, Navigationssystem, Bordcomputer, Telefonanlage, und dergleichen mehr. Durch das Zusammenfassen mehrerer Geräte-Bedienzuweisungen sind solche Bedienelemente insbesondere für den Einsatz in Kraftfahrzeugen einigen technischen Anforderungen unterworfen. Zum einen muß das Multifunktionsbedienelement sicher und leicht, und zur Verhinderung einer Ablenkung des Fahrzeugführers auch selbsterklärend sein. Eine sichere Bedienbarkeit im Kraftfahrzeug bedeutet insbesondere, daß keine weitergehende Ablenkung vom übrigen Verkehrsgeschehen hervorgerufen werden darf. Dazu müssen die einzelnen Bedientasten gut erreichbar positioniert sein und der Bildschirm des Multifunktionsbedienelementes muß zudem leicht einsehbar sein. Die generierbaren Funktionen müssen logisch selbsterklärend eingestellt bzw. abgerufen werden können.

Aus der EP 0 701 926 A2 ist ein Multifunktionsbedienelement insbesondere für Kraftfahrzeuge bekannt, bei welchem ein Bildschirm sowie ein oder mehrere Tastenfelder Verwendung finden. So ist hieraus auch bekannt, Bedien- und Schaltelemente bzw. -tasten logisch zuzuweisen. Die Zuweisung erfolgt dabei derart, daß eine übergeordnete Funktionsgruppe zunächst die ansprechende Einheit auswählt, und darüber hinaus den untergeordneten Funktionsgruppen oder Bedienelementen sozusagen die Geräte zuweist, die nunmehr bedient werden sollen. Die Bedienelemente, d. h. die Tasten zur Bedienung sind randseitig neben oder unter dem Bildschirm verteilt angeordnet. Der Bildschirm selbst hat eine fest vorgegebene Abmessung, so daß die Position der randseitigen Tasten auch nachhaltig ortsfest gegeben ist. Nachteilig ist hierbei zum einen die festgelegte Bildschirmgeometrie, die damit auch die Funktionen einschränkt, und darüber hinaus entsteht ein durch die mit zum Teil mit erheblichem Abstand vom Bildschirmrand angeordneten Tasten eine effektive Gesamtoberfläche, die beim Einbau ins Kraftfahrzeug ungünstig ist.

Darüber hinaus. werden den besagten Bedientasten hier gewählten Gerätefunktion zugeordnet. Die zugewiesenen Funktionen ist im Hinblick auf ihre Tastenbelegung oftmals nicht eindeutig was den an sich gedachten selbsterklärenden Betrieb der Multifunktionseinheit erheblich beeinträchtigt.

Sicherlich werden den Bedientasten je nach gewählter Gerätezuweisung entsprechende Funktionen zugeordnet, jedoch ist die Funktionszuweisung nicht selbsterklärend kenntlich gemacht. Hierbei tritt natürlich benachteiligend hervor, daß im besagten Stand der Technik Funktionstasten neben dem Bildschirm in zwei Reihen nebeneinander angeordnet sind. Eine Funktionszuweisung bei einer entsprechenden Geräteauswahl ist hier nur schwer möglich.

Der Erfindung liegt somit die Aufgabe zugrunde, ein Multifunktionsbedienelement der gattungsgemäßen Art dahingehend weiterzubilden, daß zum einen eine optimale kompakte Plazierung der Bedientasten möglich ist, zum anderen aber die wechselnden Funktionszuweisungen zu den Bedientasten deutlicher wird.

Die gestellte Aufgabe wird bei einem Multifunktionsbedienelement der gattungsgemäßen Art durch die kennzeichnenden Merkmale des Patenanspruchs 1 gelöst.

Weitere vorteilhafte Ausgestaltungen der Erfindung sind in den abhängigen Ansprüchen 2 bis 10 angegeben.

Kern der Erfindung besteht nunmehr darin, daß die randseitig angeordneten Bedientasten optisch auf den Bildschirm als in denselben optisch hinein fortgesetzt dargestellt werden, und daß die Tasten Softkey-Tasten sind, denen auf den Bildschirm die jeweils zugeordneten Funktionen in Tastennähe als generierte Funktionssymbole anzeigbar sind. Daß die Tasten randseitig optisch auf den Bildschirm oder die Bildschirmoberfläche in dieselbe hinein fortgesetzt dargestellt werden bedeutet, daß randseitig verlaufende Drucktastenbereiche zwar körperhaft vorgegeben sind. Daß jedoch an dem Rand, der in Bildschirm bzw. Bildschirmoberfläche übergeht, die Tasten als auf dem Bildschirm fortgesetzt dargestellt werden. Dies hat letztendlich die Wirkung, daß zum einen die Tasten im Randbereich des Bildschirms haptisch greifbar sind im Randbereich des Bildschirms, optisch aber auf die Bildschirmfläche hin fortgesetzt werden, und zwar soweit, daß die auf dem Bildschirm jeweils der Funktion zugewiesenen Symbole direkt an die optische Fortsetzung der Tasten im Bildschirm platziert werden. Dies hat dann auch eine visuelle gute Zuordnung, die den jeweiligen Tastenfunktion unmißverständlich und eindeutig zuordnenbar ist.

Dadurch werden die sogenannten Softkey-Tasten leicht betätigbar, und zum anderen ist Ihre jeweilig über das Multifunktionsbedienelement zugewiesene Funktion auch auf dem Bildschirm deutlich erkennbar symbolisch dargestellt. Das heißt, wird über eine entsprechende Funktionstaste dem Multifunktionsbedienelement beispielsweise die Telefonfunktion zugeordnet, dann erfolgt eine Zuordnung der besagten Bedientasten auf die einzelnen Funktionen eines Telefons. So kann dann beispielsweise einer Taste symbolisch ein aufgeschlagenes Buch zugewiesen sein, womit gemeint ist, daß bei Tastendruck eine Telefonbuchfunktion abrufbar ist. Weitere Tasten, wie ein farblich markierter Hörer können dabei den Funktionen "auflegen" oder "abnehmen" zugeordnet sein. Wichtig ist hierbei, daß die Tasten, in diesem Fall die Softkeys, optisch in den Bildschirm scheinbar hineinragen und zwar soweit, bis sie in die Nähe der dargestellten Funktionen hineinragen. Damit wird die besagte temporäre Funktionszuweisung in Verbindung mit der Bildschirmdarstellung eindeutig.

Dabei ist bereits auf den Bedientasten eine Lichtleiste angebracht, die sich auf den Bildschirm hinein fortsetzt. Diese Linie kann dabei in den Bildschirm hinein fortgesetzt so dargestellt werden, daß auf dem Bildschirm die gleichen Farben oder Farbtöne verwendet werden. Damit ist eine noch geeignetere und optisch hervorgehobenere Zuordnung zu den einzelnen Tasten möglich.

In vorteilhafter Ausgestaltung der Erfindung ist angegeben, daß die Tasten als Touch-Screen-Schalter oder -Tasten ausgebildet sind.

In weiterer vorteilhafter Ausgestaltung ist angegeben, daß die Tasten Drucktasten sind. Zum anderen kann auch die fortgesetzte Tastenfläche auf dem Bildschirm tastsensitiv sein, nämlich im ersten Beispiel als Touch-Screen Schalter.

Die Tasten sind dabei so angeordnet, daß sie in ihrer horizontalen Erstreckung zumindest teilweise in die Bildschirmfläche integriert sind. Dabei kann die Integration so erfolgen, daß die Tasten bei minimal eingestellter Bildschirmbreite teilweise in die Bildschirmfläche hineinragen und bei maximaler eingestellter Bildschirmbreite vollständig in die Bildschirmfläche hineinintegriert sind. Dies ist vorteilhaft in dem Falle, daß der Bildschirm oder die Bildschirmausleuchtung variabel ist und an die entsprechend gewählte Funktion angepaßt wird.

Weiterhin ist vorteilhaft angegeben, daß die Tasten derart geformt bzw. gestaltet und platziert sind, daß sie über den Bildschirm beschriftet und ausgeleuchtet werden in der oben dargestellten Weise. Das heißt sie werden nicht nur symbolisch beschriftet, sondern sie werden auch ausgeleuchtet.

Weiterhin Vorteilhaft ist dabei natürlich, daß der Bildschirm als Farbbildschirm ausgestaltet ist. Dabei ist desweiteren die Grundfarbe des Bildschirms oder der Markierungsleisten auf dem Bildschirm auf unterschiedliche Farben einstellbar bzw. wählbar ist.

In weiterer vorteilhafter Ausgestaltung ist angegeben, daß die Symbole von zumindest temporär betätigungsaktiven Tasten auf dem Bildschirm hervorgehoben darstellbar sind. Dies in der Weise wie oben bereits beschrieben.

In letzter vorteilhafter Ausgestaltung ist angegeben, daß das Bedienelement zur Bedienung vom Fond des Fahrzeuges aus, in den Rückseiten der Vordersitzkopfstützen angeordnet bzw. integriert ist. So können gewisse Funktionen auch von den Rücksitzen, d. h. von den entsprechenden Passagieren im Fond des Fahrzeuges ausgelöst werden. Die Wahl eines in unterschiedlichen Farben darstellbaren Bildschirmes hat den Vorteil, daß mit ein und derselben Bildschirmausgestaltung Fahrzeuge unterschiedlicher farblicher Ausstattung bestückt werden können. So können beispielsweise bei entsprechend farblichen Innenausstattungen dazu passend die Bildschirme bzw. die Displays dominierend in rötlichen oder bläulichen oder grünlichen etc. Farbtönen eingestellt werden.

Die Erfindung ist in der Zeichnung dargestellt und nachfolgend näher beschrieben.

Es zeigt:
- Figur 1:: Multifunktionsbedienelement, funktionszugewiesen der Telefoneinrichtung
- Figur 2:: Funktionszuweisung des Multifunktionsbedienelementes mit Telefonbuch Funktion.
- Figur3:: Funktionszuweisung des Multifunktionsbedienelementes zum Navigationssystem.

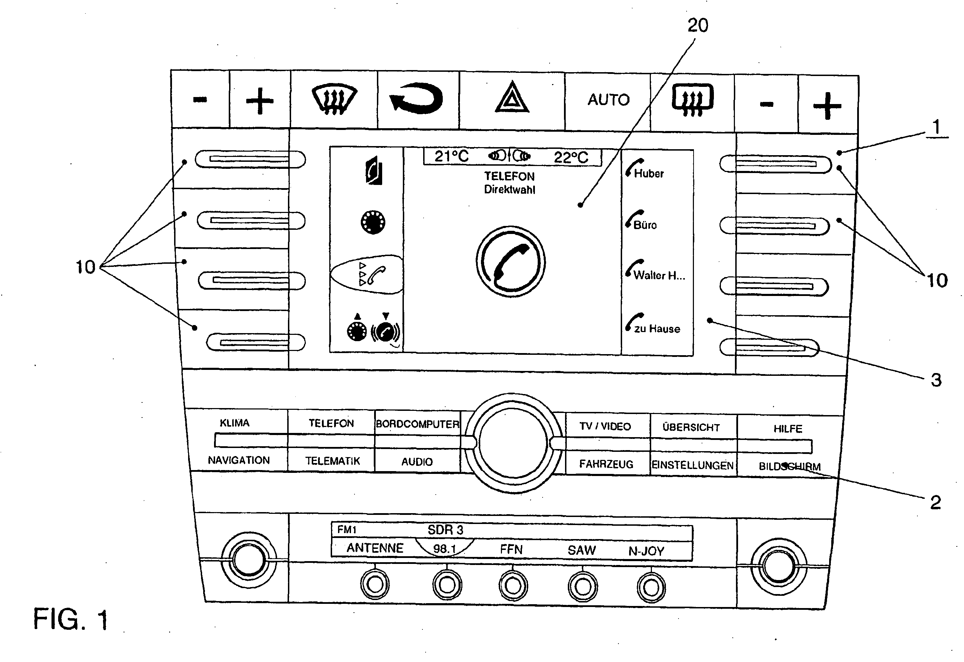

Figur 1 zeigt die Funktionszuweisung des Multifunktionsbedienelementes 1 zur Funktion der Telefonanlage im Kraftfahrzeug. Hierbei kann über entsprechende Tasten 2 unterhalb des Bildschirmes 3 die entsprechende Funktionszuweisung zu einem entsprechenden Gerät, für das der Bildschirm nunmehr Anzeige und Bedientasten 10 bereitstellen soll, angewählt werden. Bei Betätigung der Drucktaste Telefon erscheint die entsprechend hier dargestellte Anzeige auf dem Bildschirm des Multifunktionsbedienelementes. In der Mitte ist ein Anzeigepanel 20 dargestellt, welches mittig im Anzeigefeld des Bildschirmes 3 generiert wird. Dort weist auch das entsprechende Symbol auf die entsprechende Funktion hin. Darüber ist eine eingeschobene kleine Anzeige, die überdies auch noch übergreifende Funktionen, wie beispielsweise die Temperatureinstellung der Klimaanlage auch weiterhin abhängig von der gerade aktuell gewählten Funktion anzeigt. Randseitig zu den besagten Bedientasten sind Bildschirmflächen vorgehalten in welchen bzw. auf welchen Symbole dargestellt werden. Hierbei ist deutlich zu erkennen, daß der mechanisch betätigbare Bereich oder Abschnitt des Drucktasters auf dem Bildschirm als imaginäre Fortsetzung dargestellt wird. D. h. auf dem Bildschirm erscheint ein Abschnitt, welcher auf oder in den Bildschirm integriert ist, und die ansonsten mechanischen Drucktasten visuell scheinbar auf die Bildschirmfläche hin fortsetzt.

Den jeweiligen Drucktasten sind dabei diejenigen Funktionen zugewiesen, die mit den entsprechenden rechts oder links davon stehenden Symbolen dargestellt sind. So ist dem oberen Drucktaster bei diesem funktionsstarken Multifunktionsbedienelement die Telefonbuchfunktion zugewiesen. Die darunter liegende Taste ist einem Symbol, gleichend einer Wählscheibe eines Dialogtelefons zugeordnet, womit gemeint ist, daß dieser besagten Taste die Wählfunktion zugewiesen ist. Der nächsten darunterliegenden Taste ist ein Symbol zugewiesen welches beispielsweise der Funktion Hörer abnehmen" zugeordnet ist. Mit Hörer abnehmen ist natürlich die Aktivierung der Freisprechanlage im Kraftfahrzeug gemeint; also mit der aktiven Gesprächsübernahme zu beginnen.

Die darunter liegende Drucktaste enthält zwei nebengeordnete Symbole die darauf hindeuten, daß damit Gespräche entgegengenommen oder die vorgewählten Nummern aktiviert werden. Im rechten Bereich des Bildschirmes und den dort angeordneten Bedientasten ist die nähere Auswahl von vorher angewählten Telefonnummern zugeordnet. In der näheren Auswahl stehen hierbei Adressaten die vorher in das System eingespeichert wurden. Bei entsprechender Betätigung der jeweiligen entsprechenden Bedientaste, wird die entsprechend dem dortigen Merkwort zugeordnete Telefonnummer aktiviert.

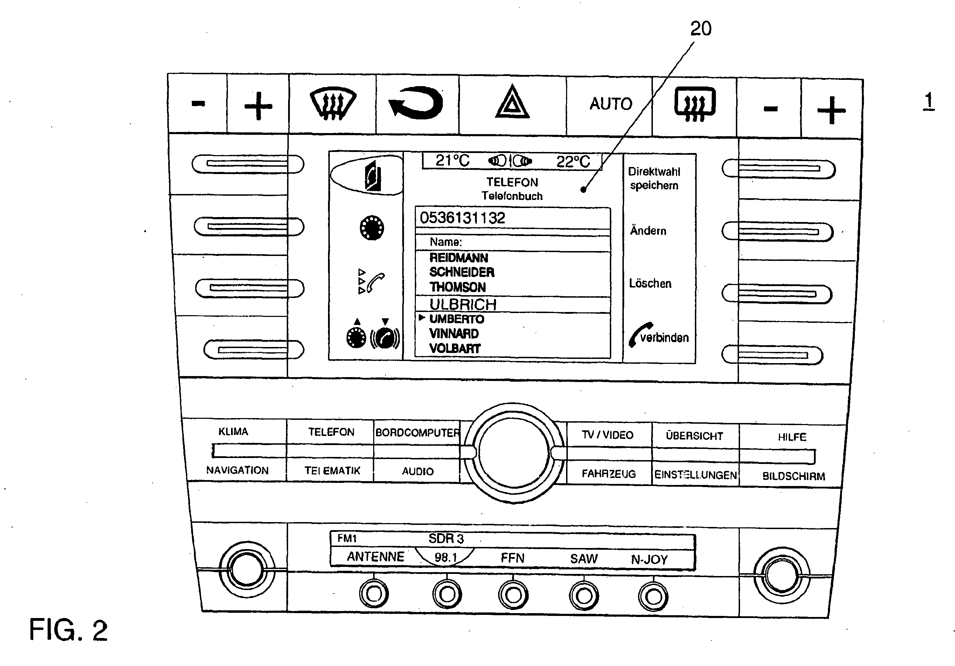

Figur 2: zeigt die aktive bzw. aktivierte Telefonbuchfunktion. Diese ist entsprechend durch farbliche oder kontrastierte Unterlegung des Telefonbuchsymboles dargestellt. Auf dem mittleren Anzeigepanel 20 werden dann die entsprechenden Telefonbuchlisten aufgeführt. Deutlich zu erkennen ist hierbei, daß die Betätigung der der Telefonbuchfunktion zugewiesenen Bedientaste auf der rechten Seite auch eine Veränderung von zugewiesenen Funktionen zu den rechtsseitigen Bedientasten 10 bewirkt. Das System aktualisiert sich somit selbsttätig und die einzelnen Bedientasten und deren zugewiesenen Funktionen sind auch untereinander abhängig von ihrer jeweiligen Betätigung oder ihrem jeweiligen Betätigungsstatus.

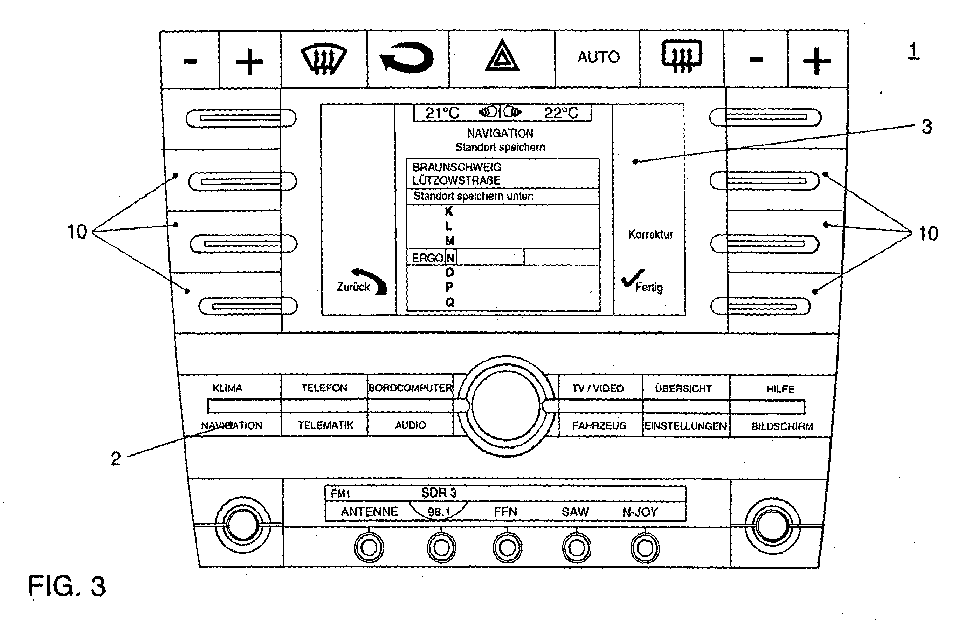

Figur 3 zeigt ein Ausgestaltungsbeispiel bei einer gewählten Gerätezuweisung, nämlich der des Navigationssystemes. Das Navigationssystem wird durch eine auf oder unterhalb des Bildschirmes angeordneten Betätigungsleiste, und auf dieser vorgesehenen Tasten 2 mit der Aufschrift Navigation aktiviert. Schon wechselt der Bildschirm auf den entsprechenden Status und die entsprechende Gerätezuweisung, nämlich die des Navigationssystems. Der mittlere Bereich des Bildschirms wird dabei zur näher spezifizierten Anzeige verwendet, und die randseitigen Bereiche des Bildschirms nahe der Bedientasten werden dabei wieder für Beschriftungen oder Symbolzuweisungen zu den Bedientasten verwendet. Die entsprechende Betätigung der jeweiligen Bedientaste bewirkt entweder den Aufruf eines Untermenüs oder die Aktivierung der dort dargestellten Funktion.

Insgesamt ist das System selbsterklärend, und durch die Einbindung von sowohl der Softkey-Funktionen, die sich dem jeweiligen ausgewählten Gerät unterordnen, und die teilweise visuell optisch auf dem Bildschirm hineinerstreckten Bedientasten ergeben eine logisch einfach erfassbare, und vor allem leicht bedienbare Ausbildung des erfindungsgemäßen Multifunktionsbedienelementes.

## Patentansprüche

1. Multifunktionsbedienelement für Kraftfahrzeuge mit einem Bildschirm (3) sowie randseitig am Bildschirm (3) angeordnete Bedientasten (10), wobei den Bedientasten (10) in Abhängigkeit von angewählten Bedienebenen Funktionen zuweisbar sind, welche auf dem Bildschirm (3) in Tastennähe mit der Zuweisung in Form von Funktionssymbolen angezeigt werden,
**dadurch gekennzeichnet, dass**
die randseitig am Bildschirm angeordneten Bedientasten (10) auf dem Bildschirm optisch hinein fortgesetzt dargestellt sind, derart dass sie optisch in den Bildschirm scheinbar hineinragen und dass durch die optische Darstellung eine Zuordnung zwischen den Bedientasten (10) und der ihnen zugewiesenen Funktion erfolgt, wobei auf jeder Bedientaste eine Lichtleiste angebracht ist, die in den Bildschirm hinein fortgesetzt dargestellt ist.

2. Multifunktionsbedienelement nach Anspruch 1, **dadurch gekennzeichnet, dass** die Bedientasten (10) zumindest auf den auf den Bildschirm fortgesetzten Abschnitten als Touch-Screen-Tasten ausgebildet sind.

3. Multifunktionsbedienelement nach Anspruch 1, **dadurch gekennzeichnet, dass** die Bedientasten (10) als Drucktasten ausgebildet sind.

4. Multifunktionsbedienelement nach Anspruch 2 oder 3, **dadurch gekennzeichnet, dass** die Bedientasten (10) in ihrer horizontalen Erstreckung zumindest teilweise in die Bildschirmflächen integriert sind.

5. Multifunktionsbedienelement nach Anspruch 4, **dadurch gekennzeichnet, dass** die Bedientaste bei minimal eingestellter Bildschirmbreite zumindest teilweise in die Bildschirnfläche hineinragen, und bei maximal eingestellte Bildschirmbreite vollständig in die Bildschrimfläche integriert sind.

6. Multifunktionsbedienelement nach einem der vorangegangenen Ansprüche, **dadurch gekennzeichnet, dass** die Bedientasten (10) derart geformt bzw. gestaltet und plaziert sind, dass sie über den Bildschirm (3) beschriftet bzw. ausgeleuchtet sind.

7. Multifunktionsbedienelement nach einem der vorangegangenen Ansprüche , **dadurch gekennzeichnet, dass** der Bildschirm (3) ein Farbbildschirm ist.

8. Multifunktionsbedienelement nach einem der vorangegangenen Ansprüche, **dadurch gekennzeichnet, dass** die Grundfarbe des Bildschirms (3) oder Markierungsleisten auf dem Bildschirm in unterschiedlichen Farben generierbar ist bzw sind.

9. Multifunktionsbedienelement nach einem der vorangegangenen Ansprüche, **dadurch gekennzeichnet, dass** die Symbole von betätigungsaktiven, zumindest temporär aktiven Bedientasten auf dem Bildschirm entsprechend hervorgehoben darstellbar sind.

10. Multifunktionsbedienelement nach einem der vorangegangenen Ansprüche, **dadurch gekennzeichnet, dass** das Multifunktionsbedienelement (1) zur Bedienung vom Fond des Kraftfahrzeugs aus in den Rückseiten der Vordersitzkopfstützen angeordnet bzw. integriert sind.

## Claims

1. Multifunction operating control device for motor vehicles having a screen (3) and operating control keys (10) arranged at the edge of the screen (3), it being possible to assign functions to the operating control keys (10) in accordance with selected operating control levels and said functions being displayed on the screen (3) in the vicinity of the keys with the assignment in the form of function symbols, **characterized in that** the operating control keys (10) which are arranged at the edge of the screen are represented on the screen continuing visually into it in such a way that they appear to project visually into the screen, and **in that** the visual representation produces an assignment between the operating control keys (10) and the function assigned to them, wherein a lighting strip which is represented continuing into the screen is mounted on each operating control key.

2. Multifunction operating control device according to Claim 1, **characterized in that** the operating control keys (10) are embodied as touchscreen buttons at least on the sections which continue onto the screen.

3. Multifunction operating control device according to Claim 1, **characterized in that** the operating control keys (10) are embodied as push-button keys.

4. Multifunction operating control device according to Claim 2 or 3, **characterized in that** the operating control keys (10) are integrated, in their horizontal extent, at least partially into the screen surface.

5. Multifunction operating control device according to Claim 4, **characterized in that** the operating control keys project at least partially into the screen surface when the screen width is set to a minimum, and are integrated completely into the screen surface when the screen width is set to a maximum.

6. Multifunction operating control device according to one of the preceding claims, **characterized in that** the operating control keys (10) are formed or shaped and positioned in such a way that they are labelled or illuminated via the screen (3).

7. Multifunction operating control device according to one of the preceding claims, **characterized in that** the screen (3) is a colour screen.

8. Multifunction operating control device according to one of the preceding claims, **characterized in that** the basic colour of the screen (3), or marker bars on the screen, can be generated in different colours.

9. Multifunction operating control device according to one of the preceding claims, **characterized in that** the symbols of activated, at least temporarily active operating control keys can be represented in an appropriately highlighted way on the screen.

10. Multifunction operating control device according to one of the preceding claims, **characterized in that** the multifunction operating control device (1) is arranged or integrated in the rear sides of the front seat headrests in order to be operated from the rear of the motor vehicle.

## Revendications

1. Elément de commande multifonctionnel pour véhicules automobiles, qui présente un écran (3) ainsi que des touches de commande (10) disposées sur le bord de l'écran (3), des fonctions pouvant être attribuées aux touches de fonction (10) en fonction de menus de commandes sélectionnées qui sont affichées avec leur attribution sous la forme de symboles de fonction sur l'écran (3) à proximité des touches,
**caractérisé en ce que**
les touches de fonction (10) disposées sur le bord de l'écran sont représentées visuellement en étant prolongées sur l'écran de telle sorte qu'elles ressortent visiblement dans l'écran et que la représentation visuelle ait pour effet une association entre les touches de fonction (10) et la fonction qui leur est attribuée, une ligne lumineuse dont le prolongement est représenté dans l'écran étant prévue sur chaque touche de fonction.

2. Elément de commande multifonctionnel selon la revendication 1, **caractérisé en ce qu'**au moins la partie des touches de fonction (10) qui se prolonge sur l'écran est configurée comme touche d'écran tactile.

3. Elément de commande multifonctionnel selon la revendication 1, **caractérisé en ce que** les touches de fonction (10) sont configurées comme boutons poussoirs.

4. Elément de commande multifonctionnel selon les revendications 2 ou 3, **caractérisé en ce que** l'extension horizontale des touches de fonction (10) est intégrée au moins en partie dans la surface de l'écran.

5. Elément de commande multifonctionnel selon la revendication 4, **caractérisé en ce que** lorsque la largeur de l'écran est réglée à un minimum, les touches de fonction pénètrent au moins en partie dans la surface de l'écran et **en ce que** lorsque la largeur de l'écran est réglée au maximum, elles sont intégrées complètement dans la surface de l'écran.

6. Elément de commande multifonctionnel selon l'une des revendications précédentes, **caractérisé en ce que** les touches de fonction (10) sont formées, configurées et disposées de manière à être inscrites ou éclairées par l'intermédiaire de l'écran (3).

7. Elément de commande multifonctionnel selon l'une des revendications précédentes, **caractérisé en ce que** l'écran (3) est un écran en couleurs.

8. Elément de commande multifonctionnel selon l'une des revendications précédentes, **caractérisé en ce que** la couleur de base de l'écran (3) ou des lignes de repérage prévues sur l'écran peuvent être créées ou sont créées en différentes couleurs.

9. Elément de commande multifonctionnel selon l'une des revendications précédentes, **caractérisé en ce que** les symboles de touches de fonction activées par actionnement et actives au moins temporairement sont représentées sur l'écran en étant mises en évidence de manière appropriée.

10. Elément de commande multifonctionnel selon l'une des revendications précédentes, **caractérisé en ce que** l'élément de commande multifonctionnel (1) est disposé ou intégré dans le côté arrière des appuie-tête des sièges avant de manière à pouvoir être actionné depuis les sièges arrière du véhicule automobile.
